# EUROPEAN PATENT APPLICATION

(11) **EP 3 758 302 A1**
(43) Date of publication of application: **30.12.2020**
(21) Application number: 20176275.4
(22) Date of filing: 25.05.2020
(51) Int. Cl.: H04L 12/40

(54) **ABNORMALITY DETECTION DEVICE**

(30) Priority: 27.06.2019 JP 2019119469
(71) Applicant: YAZAKI CORPORATION, Minato-ku, Tokyo 108-8333 (JP)
(72) Inventor: AKASHI, Masanori, Shizuoka, 410-1194 (JP)
(74) Representative: Grünecker Patent- und Rechtsanwälte PartG mbB

(57) **Abstract**

Provided is an abnormality detection device that can detect an abnormality caused by transmission of invalid communication data quickly and with a reduced processing load. A relay (20) includes a distribution buffer (24) for receiving a message frame and a control unit (21) that obtains a value related to a transmission interval for an irregular frame among the message frames received by the distribution buffer (24), determines that the message frame transmitted irregularly is abnormal when the obtained value related to the transmission interval is equal to or less than a predetermined threshold, and outputs the determination result that the message frame is abnormal.

## Description

### BACHGROUND OF THE INVENTION

### Field of the Invention

The present invention relates to an abnormality detection device that detects an abnormality such as an attack on a device or the like connected to a network.

### Description of the Related Art

In recent years, a vehicle is equipped with a number of electronic control units (ECUs), which are connected via a network. Then, each ECU transmits and receives information necessary for controlling the vehicle-mounted equipment to be controlled to and from other ECUs. In this way, the ECUs cooperate with each other by communicating with each other.

In the network mounted on the vehicle, a person with intention of cheating establishes a fraudulent device on the network and transmits fraudulent information from the fraudulent device, raising problems such as communicating between ECUs or malfunctioning of the ECU.

For example, Patent Literature 1 discloses that an ECU 14 executes a first determination of determining whether frame is invalid based on a result of a message authentication for the frame received from a CAN 24, and a second determination for determining whether frame is invalid based on a mode of the frame and a predetermined rule. Then, it is described that the ECU 14 changes the contents to be notified to the vehicle monitoring server 100 or a priority of the notification according to a combination of the result of the first determination and the result of the second determination.

### Citation List

### Patent Literature

Patent Literature 1: Japanese Patent Application Laid-Open No. 2018-160786

### SUMMARY OF THE INVENTION

In the method described in Patent Literature 1, it is necessary to determine the message authentication and the mode of the frame for each frame ID, and therefore a processing load is applied to the ECU and the like. For example, when an excessive load is applied as a DoS attack (Denial of Service attack), there is a possibility that message authentication and frame mode determination processing cannot be completed.

In view of the above problems, an object of the present invention is to provide an abnormality detection device capable of suppressing a processing load and quickly detecting an abnormality caused by transmission of invalid communication data.

An invention made in order to solve the above-mentioned problems is an abnormality detection device including a receiving unit for receiving communication data in which an identifier is set; an arithmetic unit that obtains a value related to a transmission interval for specific communication data scheduled to be transmitted irregularly among the communication data received by the receiving unit; a determination unit that determines that the specific communication data is abnormal based on the value related to the transmission interval determined by the arithmetic unit and a predetermined threshold; and an output unit that outputs a result determined by the determination unit to be abnormal.

As described above, according to the present invention, it is possible to determine the abnormality based on the value related to the transmission interval of the communication data transmitted irregularly. Usually, irregularly transmitted communication data is not transmitted continuously for a short period of time, so that it can be easily determined that invalid communication data has been transmitted. Therefore, it is possible to suppress the processing load and quickly detect the abnormality due to the transmission of the invalid communication data.

### BRIEF DESCRIPTION OF THE DRAWINGS

FIG. 1 is a schematic configuration diagram of an in-vehicle communication network having a relay including an abnormality detection device according to a first embodiment of the present invention;
FIG. 2 is a functional configuration diagram of the relay shown in FIG. 1;
FIG. 3 is a flowchart of an abnormality detection operation in the relay shown in FIG. 1;
FIG. 4 is a flowchart of an abnormality detection operation according to a second embodiment of the present invention;
FIG. 5 is an explanatory diagram of a method for calculating a number of counts per unit time; and
FIG. 6 is a flowchart of an abnormality detection operation according to a third embodiment of the present invention.

### DETAILED DESCRIPTION OF THE PREFFERRED EMBODIMENTS

### (1st Embodiment)

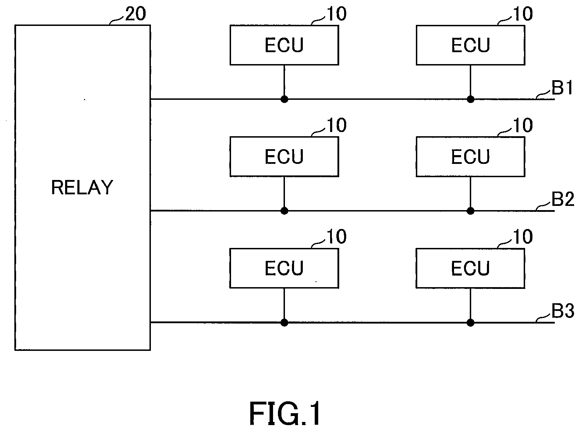

Hereinafter, a first embodiment of the present invention will be described with reference to the drawings. FIG. 1 is a schematic configuration diagram of an in-vehicle communication network having a relay including an occupancy calculating device according to a first embodiment of the present invention.

The in-vehicle communication network 1 is installed in a vehicle such as an automobile. Then, as shown in FIG. 1, the in-vehicle communication network 1 includes a relay 20 and an ECU 10. In the in-vehicle communication network 1, three buses B1 to B3 are connected to the relay 20, and a plurality of ECUs 10 is connected to the buses B1 to B3, respectively. The number of ECUs 10 is not limited to the illustrated number, and is not limited as long as it is within an upper limit of communication protocol used in the in-vehicle communication network 1.

Here, the ECU indicates an electronic control unit and controls various in-vehicle devices. Therefore, the in-vehicle device is connected to the ECU 10 as a load (not shown in FIG. 1). In the present embodiment, communication between the ECUs is performed on the bus B according to a communication protocol of a CAN (Controller Area Network). The communication protocol is not limited to CAN, but may be another communication protocol such as CAN FD (CAN with Flexible Data-Rate). However, as described below, it is preferable to be able to set communication data scheduled to be transmitted regularly (regular frames) and communication data scheduled to be transmitted irregularly (irregular frames).

The ECU 10 generally includes a microcomputer (micro-computer) having a CPU (Central Processing Unit) and a memory such as a ROM (Read Only Memory) and a RAM (Random Access Memory), and a communication circuit, and the like. The CPU executes control program stored in the ROM, thereby controlling the load connected to the CPU and controlling the entire ECU.

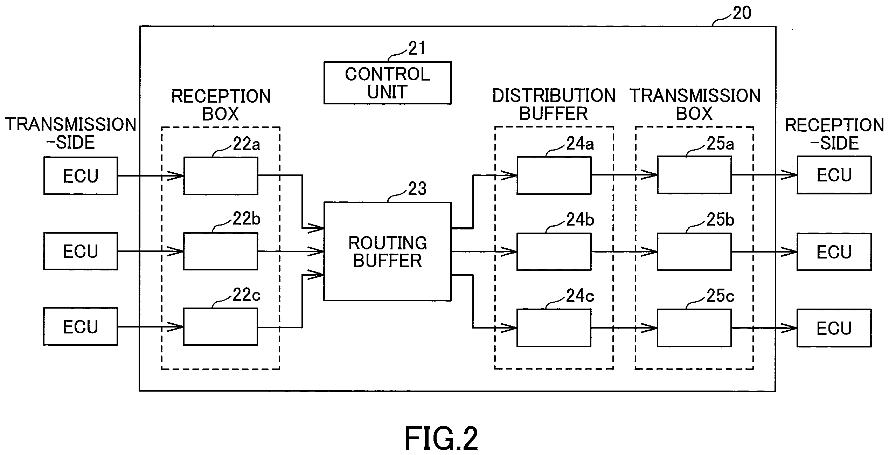

The relay 20 has a function of relaying communication between buses of different systems such as the bus B1 and the bus B2. Further, the relay 20 includes the abnormality detection device. FIG. 2 shows a functional configuration of the relay 20. FIG. 2 mainly shows a configuration of a portion related to the abnormality detection device. The relay 20 can receive all message frames as communication data transmitted on the buses B1 to B3.

In the present embodiment, the relay 20 includes the abnormality detection device, but the ECU 10 may include the abnormality detection device. However, it is possible to take measures such as discarding an invalid message frame during transmission by detecting an abnormality in a device that relays to the ECU 10, rather than detecting an abnormality at the terminal such as the ECU 10. Therefore, the processing load on the ECU 10 can be reduced.

As shown in FIG. 2, the relay 20 includes a control unit 21, a reception box 22, a routing buffer 23, a distribution buffer 24, and a transmission box 25.

The control unit 21 is configured by a microcomputer having a memory such as a CPU, a ROM, and a RAM. The control unit respectively controls the reception box 22, the routing buffer 23, the distribution buffer 24, and the transmission box 25 to control the entire relay 20. Further, the control unit 21 performs an operation of detecting an abnormality such as reception of an invalid message frame based on the message frame stored in the distribution buffer 24.

The reception box 22 is composed of three reception boxes 22a to 22c. The reception box 22 receives the message frame input from the transmission-side ECU 10 and temporarily stores the message frame. In FIG. 2, there are three reception boxes 22 corresponding to the buses B1 to B3 as shown in FIG. 1, but the number is not limited to three and may be one or more.

The routing buffer 23 distributes the message frames stored in the reception box 22 to the distribution buffers 24a to 24c according to whether they are irregular frames or regular frames. The distribution in the routing buffer 23 may be determined based on, for example, the ID of the message frame. That is, in the present embodiment, whether the frame is a regular frame or an irregular frame is determined in advance by the ID that is the identifier set in the message frame (communication data).

The distribution buffer 24 is composed of three distribution buffers 24a to 24c. In FIG. 2, the distribution buffers 24a and 24c are for regular frames, and the distribution buffer 24b is for irregular frames. In FIG. 2, there are two regular frames, but may be of course one. The distribution buffer 24 is not limited to a configuration including a plurality of memories, and may be configured by dividing one memory into a plurality of regions.

The transmission box 25 transmits the message frames stored in the distribution buffer 24 to the reception-side ECU 10 connected to each of the buses B1 to B3 at a predetermined timing.

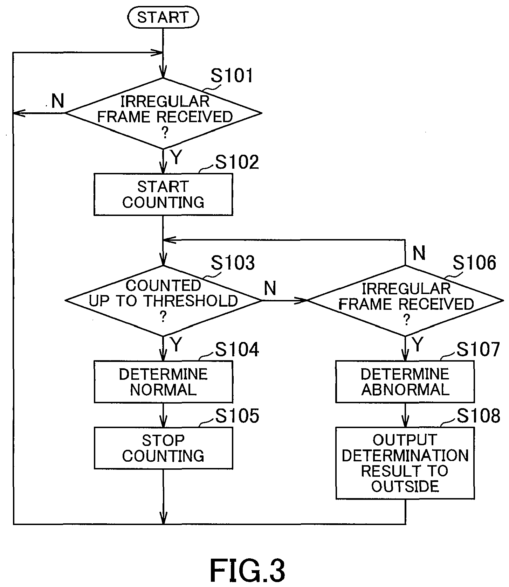

Next, a method of detecting an abnormality in the relay 20 having the above configuration will be described with reference to the flowchart of FIG. 3.

First, the control unit 21 determines whether or not the irregular frame has been received by checking the distribution buffer 24b (step S101). When an irregular frame is received (step S101: Y), a counter for measuring time provided in the control unit 21 is started (step S102). That is, the distribution buffer 24 functions as a receiving unit that receives the message frame (communication data). In addition, the control unit 21 starts measuring time from the time of reception for the message frame (specific communication data) scheduled to be transmitted irregularly among the message frames (communication data) received by the distribution buffer 24 (receiving unit).

Next, the control unit 21 determines whether or not the counter started in step S102 has counted up to a predetermined threshold (step S103). When counting up to the threshold (step S103: Y), the message frame received in step S101 is determined to be normal (step S104) since the message frame with the same ID has not been received during the counting up to the threshold. Then, the counter is stopped and reset (step S105), and the process returns to step S101. The message frame determined to be normal is transmitted from the transmission box 25 to the transmission destination ECU 10 as it is.

On the other hand, if the counter started in step S102 has not counted up to the threshold (step S103: N), the control unit 21 determines again whether the irregular frame has been received (step S106). The irregular frame determined in step S106 is a message frame having the same ID as that determined in step S101.

If the irregular frame has not been received in step S106 (step S106: N), the process returns to step S103. When the irregular frame is received in step S106 (step S106: Y), the control unit 21 determines that the irregular frame is abnormal because an interval of the irregular frame is too short since the irregular frame is received before counting to the threshold (step S107). And the control part 21 outputs the determination result (abnormality) of step S107 to the outside (step S108). The output destination in step S108 may be, for example, a display for warning a driver of occurrence of an abnormality or a recording device for recording the abnormality as a log. That is, if the measured time is equal to or less than the predetermined threshold, the control unit 21 determines abnormal. The message frame determined to be abnormal is discarded by deleting it from the distribution buffer 24.

As described above, the control unit 21 functions as the arithmetic unit counting up to the threshold (value related to transmission interval) for message frames that are scheduled to be transmitted irregularly among the message frames (communication data) received by the distribution buffer 24 (reception unit), the determination unit that determines the abnormality when the transmission interval determined by the arithmetic unit is equal to or less than the predetermined threshold, and the output unit that outputs the result determined by the determination unit to be abnormal.

The threshold described in the flowchart of FIG. 3 defines the interval between irregular frames. Therefore, this threshold is appropriately set according to the contents indicated by the irregular frame. That is, the threshold may be set for each ID. The counting is also performed for each ID, however, instead of all the IDs, an ID to be monitored may be determined in advance, and only the ID may be counted.

In the flowchart of FIG. 3, the time is measured (counted) up to the threshold to reduce the load of the time interval measurement process. The irregular frame in the present embodiment is, for example, a message frame generated by an operation of a power window, a door lock, or the like, and is often generated by an artificial operation. Therefore, for example, it does not occur at intervals of several tens of milliseconds. However, an enormous amount of time may be measured to measure the frame interval of an irregular frame in a normal case. Therefore, the upper limit of the time determined as an abnormal interval is set as a threshold, and counting is performed up to the threshold. When exceeding the threshold, it can be a normal time interval, and the load on the arithmetic processing can be reduced.

Further, as shown in the flowchart of FIG. 3, the time interval is not limited to measuring the time up to the threshold, but the time interval between irregular frames may be measured. However, as described above, the method of the flowchart in FIG. 3 can reduce the load of the calculation processing for calculating the value related to the transmission interval.

According to the present embodiment, the relay 20 is provided with a distribution buffer 24 for receiving the message frame, and the control unit 21 obtaining the value related to transmission interval for the irregular frame in the message frames received by the distribution buffer 24, and when the value related to transmission interval is below the predetermined threshold, determines that the irregularly transmitted message frame is abnormal and outputs the result of the determination.

Configuration of the relay 20 as described above can determine abnormal based on the value relating to the transmission interval of irregular frames. Since the irregular frames are not usually transmitted continuously for a short period of time, it can be easily determined that the invalid message frame has been transmitted. Therefore, it is possible to suppress the processing load and quickly detect the abnormality caused by the transmission of the invalid message frame.

In addition, the control unit 21 measures the time from the time of reception for the irregular frame among the message frames received by the distribution buffer 24, and determines abnormal when the measured time is equal to or less than the predetermined threshold. Since the control unit 21 operates in this way, it can determine abnormal if the transmission interval of the irregular frame is too short.

By setting the time measurement from the time of reception up to the threshold, it is not necessary to measure the time interval itself between two message frames, and the load of the calculation process for calculating the value related to the transmission interval can be reduced.

Further, since the control unit 21 identifies the message frame transmitted irregularly based on the ID set in the message frame, it is possible to identify the irregular frame only by confirming the ID of the message frame, making it possible to easily identify irregular frames.

### (2nd Embodiment)

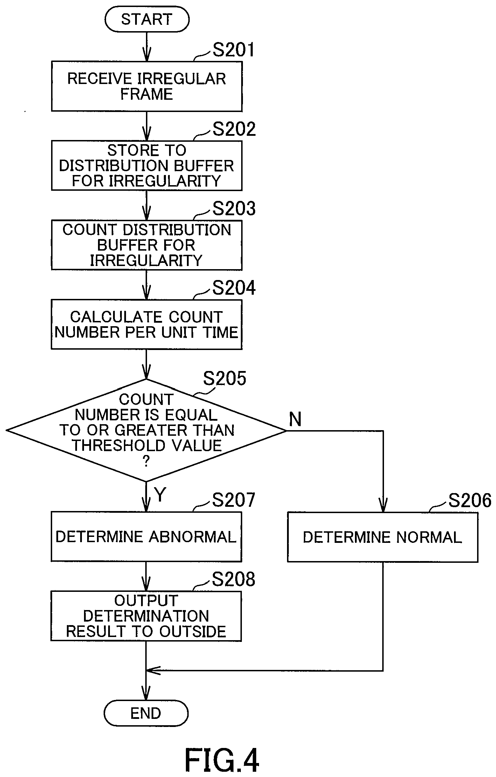

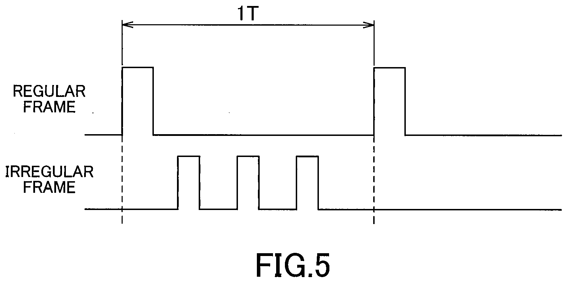

Next, a second embodiment of the present invention will be described with reference to FIGS. 4 and 5. Note that the same parts as those in the first embodiment described above are denoted by the same reference numerals, and description thereof will be omitted.

In the present embodiment, an abnormality detection method in the relay 20 is different. The abnormality detection method according to the present embodiment will be described with reference to the flowchart in FIG. 4.

First, the routing buffer 23 receives the irregular frame (step S201), and the routing buffer 23 stores the irregular frame in the irregular distribution buffer 24b (step S202).

Next, the control unit 21 counts the irregular frames stored in the irregular distribution buffer 24b (step S203).

This count is performed for each ID. Next, for the number (the number of frames) counted in step S203, the number of counts (the number of receptions) per unit time is calculated (step S204). As a method of calculating the number of counts per unit time, the number of counts in the unit time may be calculated using a time such as one second as a unit time.

The method of calculating the number of counts per unit time may be based on the period of the regular frame. A specific example will be described with reference to FIG. 5. FIG. 5 is a timing chart showing the regular frame and the irregular frame.

As shown in FIG. 5, the period of the regular frame is determined in advance. Therefore, for example, by counting how many times the irregular frame is transmitted in one period (IT) of the regular frame, the count number per unit time can be calculated. In FIG. 5, the count number per unit time is calculated in one period of the regular frame, but the number is not limited to one period, and may be a plurality of periods. That is, the period of communication data transmitted regularly is used as the unit time.

Return to the flowchart of FIG. 4. Next, the control unit 21 determines whether or not a count per unit time calculated in step S204 is equal to or greater than a predetermined threshold (step S205). The fact that the count per unit time is large means that the average transmission interval time of the regular frame is short, so the count number is a value related to the transmission interval. If the result of the determination in step S205 is not equal to or greater than the threshold (step S205: N), the state is determined to be normal, as in step S104, and the process ends. The message frame determined to be normal is transmitted from the transmission box 25 to the transmission destination ECU 10 as it is.

The threshold described in the present embodiment is also appropriately set according to the contents indicated by the irregular frame, as in the first embodiment. That is, the threshold may be set for each ID. The counting is also performed for each ID. However, instead of all the IDs, the ID to be monitored may be determined in advance, and only the ID may be counted.

On the other hand, if it is equal to or larger than the threshold (step S205: Y), the control unit 21 determines that the transmission interval of the irregular frame is too short (step S207). And the control part 21 outputs the determination result (abnormality) of step S207 to the outside (step S208). The message frame determined to be abnormal is discarded by deleting it from the distribution buffer 24.

According to the present embodiment, the control unit 21 calculates the number of receptions per unit time using the period of the regular frame for the irregular frames among the message frames received by the distribution buffer 24, and determines the irregular frame to be abnormal, if the calculated reception number is greater than or equal to a predetermined threshold. Since the control unit 21 operates in this manner, it is possible to determine an abnormality without measuring a time such as a transmission interval of the irregular frame.

### (Third embodiment)

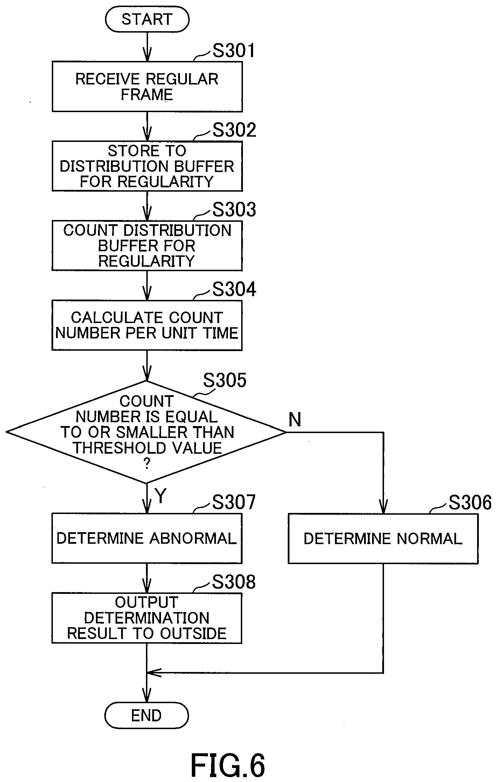

Next, a third embodiment of the present invention will be described with reference to FIG. 6. Note that the same parts as those in the first embodiment described above are denoted by the same reference numerals, and description thereof will be omitted.

In the first and second embodiments, abnormalities in the time interval are detected for the irregular frames, but in the present embodiment, abnormal periods are detected for regular frames. That is, the regular frame is the specific communication data.

Since the target in the present embodiment is a regular frame, the period may be measured, and it may be determined to be abnormal if the period is too short as compared with the period set from the ID or the like of the frame. This may be performed by a method as shown in the flowchart of FIG. 6.

First, the routing buffer 23 receives the regular frame (step S301), and the routing buffer 23 stores the regular frame in the regular distribution buffer 24a or 24c (step S302).

Next, the control unit 21 counts the number of regular frames stored in the regular distribution buffer 24a or 24c (step S303).

This count is performed for each ID. Next, for the number (the number of frames) counted in step S303, the count (the number of receptions) per unit time is calculated (step S304). As a method of calculating the number of counts per unit time, the number of counts in the unit time may be calculated using a time such as one second as a unit time.

As the method of calculating the number of counts per unit time, the method described with reference to FIG. 5 may be applied. In the case of FIG. 5, the regular frame is used to calculate the count of the irregular frame. However, as in the present embodiment, the cycle of another regular frame may be used to calculate the count of the regular frame. In this case, it is preferable that the other regular frames have a period longer than the period of the target regular frame. For example, if the period of the target regular frame is 20 milliseconds, another regular frame having a period in which the target regular frame can be counted a plurality of times, such as 100 milliseconds, is preferable.

Return to the flowchart of FIG. 6. Next, the control unit 21 calculates an average period of the regular frame based on the count number per unit time calculated in step S304. Then, it is determined whether or not the calculated cycle is equal to or less than a threshold determined based on a cycle determined in advance for the regular frame (step S305). If it is not equal to or smaller than the threshold (step S305: N), it is determined to be normal as in step S104, and the process ends. The message frame determined to be normal is transmitted from the transmission box 25 to the transmission destination ECU 10 as it is.

On the other hand, when the period is equal to or less than the threshold (step S305: Y), the control unit 21 determines that the period is too short as the period of the regular frame (step S307). And the control part 21 outputs the determination result (abnormality) of step S307 to the outside (step S308). The message frame determined to be abnormal is discarded by deleting it from the distribution buffer 24.

The threshold described in the present embodiment is also set appropriately according to the contents of the regular frame. That is, the threshold may be set for each ID. The counting is also performed for each ID. However, instead of all the IDs, the ID to be monitored may be determined in advance, and only the ID may be counted.

As described above, the control unit 21 functions as the arithmetic unit requiring the period for the regular frame of the message frames (communication data) received by the distribution buffer 24 (the receiving unit), the determination unit that determines that the period obtained by the arithmetic unit is equal to or less than the predetermined threshold, and the output unit that outputs the result determined by the determination unit to be abnormal.

According to the present embodiment, the relay 20 includes the distribution buffer 24 that receives the message frame, the control unit 21 that obtains the cycle for the regular frame of the message frames received by the distribution buffer 24, determines the abnormality if the determined cycle is equal to or less than the predetermined threshold, and outputs the result of the determination of abnormality.

Configuration of the relay 20 as described above makes it possible to determine the abnormality based on the transmission period of the regular frame. Detection of the abnormality in the period of the regular frame can make it easily determined that the invalid message frame has been transmitted. Therefore, it is possible to detect the abnormality due to the transmission of the invalid message frame quickly and with the reduced processing load.

In the above embodiment, the in-vehicle communication network 1 has been described, but the present invention is not limited to this. The present invention can also be applied to other moving objects such as ship and aircraft.

The present invention is not limited to the above embodiment. That is, those skilled in the art can make various modifications in accordance with conventionally known knowledge without departing from the gist of the present invention. Of course, as long as the configuration of the abnormality detection device of the present invention is provided even by such a modification, it is included in the scope of the present invention.

### Reference Signs List

- 20: relay (abnormality detection device)
- 21: control unit (arithmetic unit, judgment unit, output unit)
- 24: transmission buffer (receiver)

## Claims

1. An abnormality detection device comprising:
a receiving unit for receiving communication data in which an identifier is set;
an arithmetic unit that obtains a value related to a transmission interval for specific communication data scheduled to be transmitted irregularly among the communication data received by the receiving unit;
a determination unit that determines that the specific communication data is abnormal based on the value related to the transmission interval obtained by the arithmetic unit and a predetermined threshold; and
an output unit that outputs a result determined by the determination unit to be abnormal.

2. The abnormality detection device according to claim 1, wherein
the arithmetic unit measures time from when the specific communication data is received by the receiving unit,
the determination unit determines that the specific communication data is abnormal when the time measured by the arithmetic unit is equal to or less than a predetermined threshold.

3. The abnormality detection device according to claim 1, wherein:
the arithmetic unit calculates a number of receptions per unit time for the specific communication data among the communication data received by the receiving unit, and
the determination unit determines that the specific communication data is abnormal when the number of receptions calculated by the arithmetic unit is equal to or greater than a predetermined threshold.

4. The abnormality detection device according to claim 3, wherein
the arithmetic unit uses, as the unit time, a cycle of the communication data scheduled to be transmitted regularly.

5. The abnormality detection device according to any one of claims 1 to 4, wherein
the arithmetic unit identifies the communication data transmitted irregularly based on the identifier.

6. An abnormality detection device comprising:
a receiving unit for receiving communication data in which an identifier is set;
an arithmetic unit that obtains a transmission cycle for specific communication data scheduled to be transmitted regularly among the communication data received by the receiving unit;
a determination unit that determines that the specific communication data is abnormal if the transmission cycle obtained by the arithmetic unit is equal to or less than a predetermined threshold; and
an output unit that outputs a result determined by the determination unit to be abnormal.
